# EUROPEAN PATENT SPECIFICATION

(11) **EP 1 292 729 B1**
(45) Date of publication and mention of the grant of the patent: **14.07.2004**
(21) Application number: 00993943.0
(22) Date of filing: 18.04.2000
(51) Int. Cl.: D04H 13/00, D02G 1/00, D02G 3/00, B32B 5/26, D04H 3/04, D04H 3/07, D04H 3/10, D04H 3/14

(54) **NON WOVEN TEXTILE STRUCTURE INCORPORATING STABILIZED FILAMENT ASSEMBLIES**
VLIESSTOFF MIT STABILISIERTEN FILAMENTBÜNDELN
STRUCTURE TEXTILE NON TISSEE COMPRENANT DES ENSEMBLES DE FILAMENTS STABILISES INTEGRES

(43) Date of publication of application: 19.03.2003
(73) Proprietor: Lohmann GmbH & Co. KG, 56567 Neuwied (DE)
(72) Inventor: BARTH, Georg Martin, 56579 Rengsdorf (DE); CARUS, Edmund Hugh, Clitheroe, Lancashire BB7 9QJ (GB)
(74) Representative: Barker, Rosemary Anne
(86) International application number: PCT/GB2000/001510
(87) International publication number: WO 2000/063479

(56) References cited:
- EP-A- 0 053 700
- EP-A- 0 391 814
- EP-A- 0 705 932
- WO-A-96/00550
- DE-C- 513 876
- GB-A- 1 387 566
- GB-A- 1 535 264
- US-A- 3 628 224
- US-A- 3 675 409
- US-A- 4 079 568
- US-A- 4 639 253
- US-A- 4 863 776
- US-A- 5 736 219

## Description

The present invention relates to non-woven textile materials and in particular to non-woven absorbent textile materials.

The present invention has particular application to absorbent textile materials or structures for uses in the field of sanitary protection, infant care and adult incontinence protection and also in the medical field, for example in or as dressings, swabs and laparotomy sponges. Further uses where absorbency may not be a critical factor e.g. as supports are equally applicable. These can include matrix materials for use in the production of tyres, conveyor material and other industrial and medical applications, such as orthopaedic padding.

Non-woven materials made by many different processes have been utilised as components over the years to produce absorbent materials for use in feminine hygiene, infant diapers and incontinence products. Modem technologies utilising fluff pulp non-woven structures often combined with other non-woven materials to form multilayer composite materials have been used to facilitate fluid capture, distribution and containment in such compositions. Other materials such as superabsorbent polymers are often incorporated in these composites to maximise fluid containment.

WO 99/27876 and WO 99/30661 (SCA Hygiene Products AB) describe filament tows as a fluid acquisition materials in infant diapers and the like but as only one component in the absorbent matrices specified. More specifically, these specifications, both published in June 1999, disclose production of a layer of continuous tow filaments which may be of cellulose acetate, or of polyethylene, polypropylene, polyamide, polyester, polyvinyl acetate, viscose or rayon, or bicomponent. Steps in production of said layer include crimping or curling, then stretching and distributing the tow filaments, then bonding same in a pattern of lines, spots or points by any suitable technique including thermal or ultrasonic bonding, calendering, laser or print-bonding or hydroentanglement. The filaments are cut to length either before or after the aforesaid bonding. Optionally the tow filaments can be bonded at the same time as the pattern of bonding mentioned above to a layer which can be a non-woven material. No further details are provided of the method of handling the tow filaments to produce a finished layer and it is believed that it would be impractical to deal with tow filaments direct from a bale in this manner.

One object of the present invention is to propose an improved manner of handling continuous filaments which would allow their incorporation into a finished product, or a part thereof for further assembly with other layers.

In accordance with one aspect of the present invention, a method of producing a non-woven textile structure is proposed which comprises the steps of a) initially consolidating a plurality of substantially parallel continuous filaments to provide a partially stabilized filament assembly, b) further constraining said filament assembly by a folding, bundling, twisting or intertwining operations, and c) bonding or embedding the resulting constrained filament assembly to a carrier layer or layers.

Thus, the applicants believe it is impractical simply to crimp and stretch the continuous filaments and then to feed these directly into a bonding process. An intermediate step whereby the filament assembly is additionally stabilized is therefore considered necessary to achieve the two- or three-dimensional stability required in further composite production. This will impart the feel, bulk and other desirable attributes more normally associated with woven products in the final structure.

The initial consolidation step may be accomplished by application of solvent and pressure, calendering, or by hydroentanglement, or by embossing, or by crimping, followed by an additional step of stretching the filament assembly.

The further stabilizing or constraining of the filament assembly may then be accomplished by several means; for example, by braiding or by winding it upon a conical mandrel, then removing it in wound configuration from the mandrel and folding it flat or by any other suitable method of folding, twisting or intertwining of the filaments, which are substantially parallel, but may be undulating or straight.

In respect of the finished product, where the filament material is designed to serve as an absorbent core, significant improvements in fluid management, notably wicking and fluid containment are apparent over existing materials currently utilised and known to those skilled in the art.

Whilst any polymer filament system which can be rendered hydrophilic can be considered usable in this proposal, either alone or with other polymers to form blended filament assemblies, the preferred polymer is cellulose acetate which, in parallel-filament format, and stabilized to maintain integrity and performance, achieves outstanding fluid take up and wicking properties.

This performance can be optimised by the careful selection of filament diameters in the filament assemblies either as intimate blends or as arrays of coarser and finer filaments since interfilament space is required for fluid take up but finer spaces between the filaments are needed to provide the necessary capillary systems to optimise fluid wicking and containment as can be deduced from the Lucas-Washburn Equation and derivatives of this. The use of shaped cross sectional filaments is advantageous, many shapes being possible including but not limited to Y shaped filaments, stellar shaped filaments and the like. In these cases the crevices running along the shaped filaments act like fine capillary structures thus enhancing fluid wicking and full utilisation of the composite structures.

Cellulose acetate has been frequently used in non-woven fabrics in the past and reported in literature by Celanese Acetate, LIC and other sources such as Kimberly-Clark but such non-woven materials have been conventional web-like structures based on staple fibres without the use of stabilized filament assemblies.

In order to provide processability, integrity, optimum fluid performance and importantly, physical three dimensionality and optimised conformability, it is necessary to pre-stabilize the filament assemblies prior to their further stabilization and subsequent introduction into non-woven structures This can be achieved by a variety of routes dependent on the physical properties of the polymer system utilised. With the preferred polymer filaments made from cellulose acetate, methods include special fibre crimping which avoids creasing and capillary blockage, in-situ hydroentangling of the filaments to provide controlled inter-filament coherence, heat treatment, specialist moist ultra-sonic treatment, short term solvent application and withdrawal to form limited interfilament consolidation, embossing or a combination of the above technologies. This stabilization provides controlled inter-filament packing densities, vital to provide optimum fluid management in these filament assemblies. Dependent on the filament size and cross-sectional shape such densities will be very different to give this optimum fluid management. The further stabilization process has to be taken into account in optimizing these pre-stabilized filament formats since dimensional changes are possible in this further stabilization.

Although cellulose acetate is the preferred polymer for use in the filament assemblies claimed, other polymers are equally suitable. These can comprise viscose or solvent-spun rayons, polyesters, polypropylenes, and any filament-forming material which can exhibit similar properties. To provide good fluid management, hydrophilic forms of any polymer are preferred.

The filaments are consolidated by methods appropriate to the chemistries of the polymers chosen for use. A particularly suitable polymer is solvent-spun rayon where the process of initial stabilisation can be achieved using a solvent process with N-methylmorpholine-N-oxide (NMMO). With other polymers such as the polyesters or polypropylenes, initial stabilization is best achieved by mechanical or thermal means.

In some cases, pre-stabilized filaments of one polymer type (e.g. cellulose acetate) may be combined with pre-stabilized filaments of another polymer type (e.g. solvent-spun rayon) in order to gain particular fluid management properties/advantages. In other instances, similar polymer type combinations may be used to gain other advantages such as improved tactile properties - in such cases blends of cellulose acetate filament assemblies may be combined with resilient filament assemblies of polyester or polypropylene.

Radio-opaque material may be incorporated in the filament assemblies to allow for usage in x-ray detectable sponges or other devices. Such radio-opaque polymers contain high percentages of barium sulphate which can be incorporated in the spinning dope prior to filament or possibly film extrusion. Filaments of radio-opaque material would be in very close proximity to one another in the fully-stabilized filament assemblies; the majority of these fully-stabilized filament assemblies being free of the radio-opaque filaments. This is necessary to provide the required detection under x-ray conditions.

The non-woven technologies suitable for bonding such filament assemblies to a carrier layer of fibres, filaments or a non-woven material made from same, are many and varied and include the processes for blowing pulp fibres onto stabilized filament assemblies. The integrity of these assemblies may be enhanced in many cases by the incorporation of binding fibres, of which cellulose acetate is very appropriate (which can be optionally bicomponent fibres of different types such as sheath/core or side by side types for example) or related melt blown fibres (as seen in the Kimberly-Clark "COFORM" materials). In these incidences, a notorious shortcoming, inadequate fluid wicking, is overcome due to the presence of long filaments and controlled capillary structures without any tortuosity and wicking impedance seen in materials to date.

Melt blowing fibres onto stabilized filament assemblies provides for their controlled placement in non-woven structures, the melt blown fibres adhering to the upper surfaces and sides of these assemblies on deposition. By careful selection of the melt blowing polymer(s), elastomeric structures incorporating stabilized filament assemblies may be produced. Kimberly-Clark polyurethane based "Demique" systems are particularly suitable in this regard. Elastomeric structures provide for better conformability and in-use performance. Relevant melt blowing processes (onto shaped collection screens for example) to give three dimensional structures and other new melt blowing technologies known to those skilled in the art will also allow for a flexible structure surrounding filament assemblies and again, stretchable conformable products containing positioned stabilized filaments.

Spunbonding polymer into filaments and the like and resultant web or webs can be utilised to lock stabilized filament assemblies into place. The bonding processes, notably thermal but also possibly ultrasonic or other means can be utilised to achieve this locking. With thermal bonding processes, best results with minimal distortion of the filament assemblies are attained by the use of a lower melting point polymer in the spunbond component and then adhering these spunbonded filaments by relevant techniques such as through air bonding or suitable calendering processes for example.

Calender or other thermal bonding techniques can be employed to incorporate a web on one side of the stabilized filament assemblies or on both sides. Ultrasonic bonding can also be utilised to achieve similar results. Such webs should preferably be receptive to thermal bonding or ultrasonic bonding as appropriate although the thermal or ultrasonic properties of appropriate filament assembly polymers can be utilised on thermally or ultrasonically inert non-woven materials provided that the intrinsic properties of the stabilized filament assemblies are not degraded. Of particular note are techniques to provide the enhanced bonding of cellulose acetate or other polymeric stabilized filaments whereby the presence of moisture or residual solvent as appropriate facilitates this bonding of filaments under calender bonding or ultrasonic bonding processes.

The through-air bonding or powder-bonding of fibres or filaments around stabilized filament assemblies results in fabrics with defined filament assembly positioning. Many such fabrics are lofty thus enhancing fluid take-up in absorbent structures, preferably when such fibres are hydrophilic or rendered hydrophilic.

Stabilized filament assemblies can alternatively be affixed to fibrous webs by controlled needle punching processes, the needle arrays being as designed to minimise damage to the stabilized filaments placed in arrays with the fibrous webs prior to the needling process. Longer fibres are strongly preferred in the webs prior to needling coupled with adequate cross-laying to ensure fibre "wrap round" of the positioned filament assemblies.

All the non-woven structures described can be laminated to suitable backing sheets either during manufacture or as an afterprocess to provide for extra security in use by preventing fluid leakage through the thickness of the absorbent composites. Such backing sheets include polymeric films, preferably those which feature water vapour permeability to optimize skin wellness in use. Preferred backing sheets such as, for example, those made from cellulose or cellulose acetate exhibit environmentally responsible disposability.

The use of stabilized filament assemblies provides the optimum matrix for fluid management and imparts the necessary three-dimensionality so important in these types of absorbent composite structures.

The non-woven materials as disclosed in this current invention are very suitable as a replacement for gauze, either woven or non-woven as used in medical dressings, sponges and laparotomy sponges. In particular, they can be highly absorbent and can possess a non-adherent surface, if hydrophobic outer materials are combined with the stabilized filament assemblies, without any loose lint, thus providing for good wound healing. Because of the high absorbency which can be achieved using these materials, there is no need for folding or use in multiple plies, as is the case with all woven and non-woven sponges to date. This allows for economy of use, since less material is involved, and further provides for shaped sponges which are difficult to produce when folding is involved.

The stabilized filament assemblies as described can be incorporated in final non-woven production in formats which give the final composites the feel and three-dimensionality of woven and non-woven plied structures. The texture, absorbency performance, and appearance of the final composites are dependent on the number, size and spacing of the stabilized filament assemblies incorporated in these composites. The stabilized filament assemblies provide the means for fluid management to give these finished composites the necessary absorbency which to date has only been obtained by plied structures.

The materials or structures described in this disclosure can be made into converted pieces with controlled stabilized filament deposition both in the longitudinal and cross directions giving free edges to these pieces with no stabilized filaments present. In other words, the stabilized filaments may be spaced apart transversely on a carrier web, and cut at intervals as deposited and bonded so as to leave areas of carrier material around each island of stabilized filament assembly.

In this respect, it is possible to position the stabilized filament assemblies immediately prior to hydroentangling or other non-woven operations where the filament assemblies are incorporated in such a manner that the ends of these filament assemblies do not reach the edges of the finished products made from these composites. Where hydroentangling is used to produce the final composite materials, the stabilized filament assemblies can be cut and positioned prior to the passage of these assemblies through the hydroentangling process. By suitable processing it is then possible to cut out or otherwise separate the composites produced into finished product at the end of the hydroentangling process as an in-line process. Means to cut and position the stabilized filament assemblies are many and varied, and are well known to those skilled particularly in diaper manufacturing technology.

Although all the examples cited relate to absorbent materials, it is equally valid that such stabilized filament technology can be utilised to produce non-woven fabrics with unique physical properties, notably controlled strength without the problems of "necking" due to the Poisson's Ratio effect and hence rendering such materials suitable to a wide range of industrial and other applications where absorbency might not be a critical factor or be in fact necessary.

The invention will be exemplified by reference to the accompanying drawings, in which;
Figure 1 is a sketch illustrating apparatus used for production of a portion of a practical embodiment of newly formed parallel continuous filaments;
Figure 2 is a sketch illustrating a further practical embodiment of newly formed parallel continuous filaments;
Figure 3 (a and b) are sketches showing one manner of production of fully stabilized parallel continuous filaments;
Figure 4 is a diagrammatic partial perspective view of a portion of a further practical embodiment of a fully stabilized filament assembly for use in accordance with the invention;
Figure 5 is a similar view of a portion of a further practical embodiment of a fully stabilized filament assembly for use in accordance with the invention;
Figure 6 is a diagramatic partial plan view of a portion of one practical embodiment of a nonwoven laminate in accordance with the invention;
Figure 7 is a diagramatic end view of the material shown in Figure 6;
Figure 8 is a diagram of one type of apparatus used for production of a nonwoven material in accordance with the invention;
Figure 9 is a sketch transversely of apparatus similar to that of Figure 8 and to an enlarged scale, just in front of the first or second set of nozzles;
Figures 10a, 10b and 10c are diagramatic representations of two practical embodiments of a nonwoven laminate in accordance with the invention;
Figure 11 is a sketch illustrating alternative apparatus to produce another practical embodiment of a fully stabilised filament assembly for use in accordance with the invention;
Figure 12 is a sketch illustrating a method of forming a nonwoven composite in accordance with the invention;
Figure 13 is a sketch illustrating another method of forming a nonwoven composite in accordance with the invention;
Figure 14 is a sketch illustrating another method of forming a nonwoven composite in accordance with the invention;
Figure 15 is a sketch illustrating another method of forming a nonwoven composite in accordance with the invention;
Figure 16 is a sketch illustrating another method of forming a nonwoven composite in accordance with the invention, and
Figure 17 is a sketch illustrating another nonwoven composite structure in accordance with the invention.

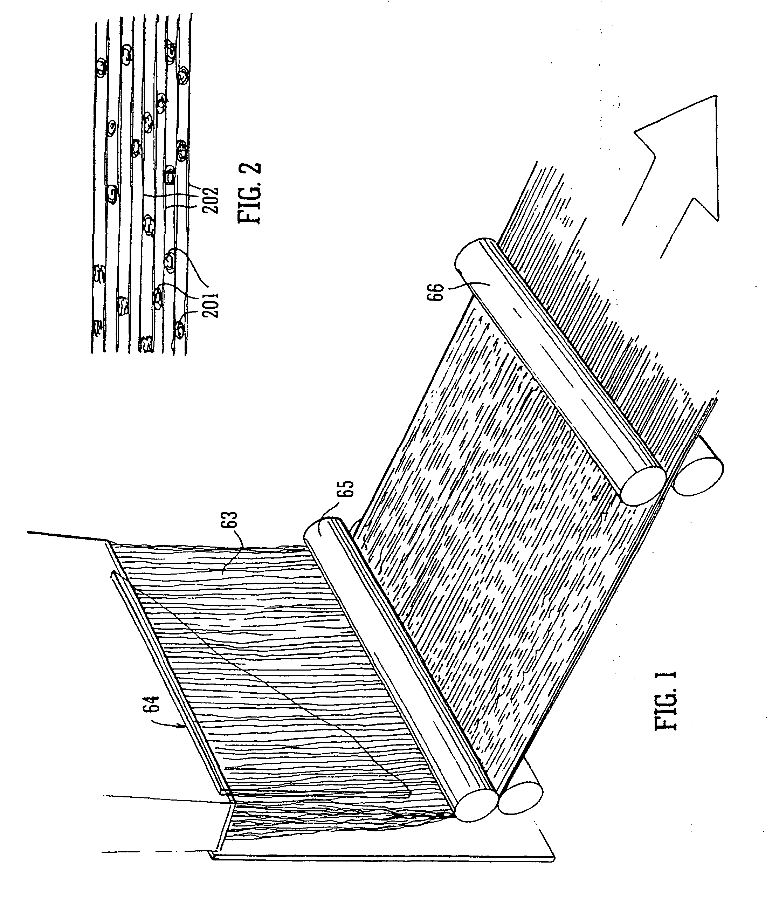

Figure 1 is a diagramatic representation illustrating the formation of a pre-stabilized filament assembly as part of the solvent-spinning of cellulose acetate.. Filaments (63) of cellulose acetate in acetone emanate from the spinneret system (64) and pass through nip rollers (65) where the residual acetone content present in the filaments causes their partial bonding, thus producing a filament assembly which can be handled, and further processed to give fully-stabilized filament assemblies. The rollers (66) can be used to give some embossing to these filaments thus imparting further integrity if so desired.

Figure 2 illustrates diagrammatically parallel filaments (202) in this case produced from solvent spun rayon which are initially consolidated by the partial fusion of these filaments after their production. Points of fusion (201) can be observed to maintain the parallel assembly of the filaments (202) thus providing optimum fluid management. Similar effects are attainable from cast films or ribbons of solvent spun rayons.

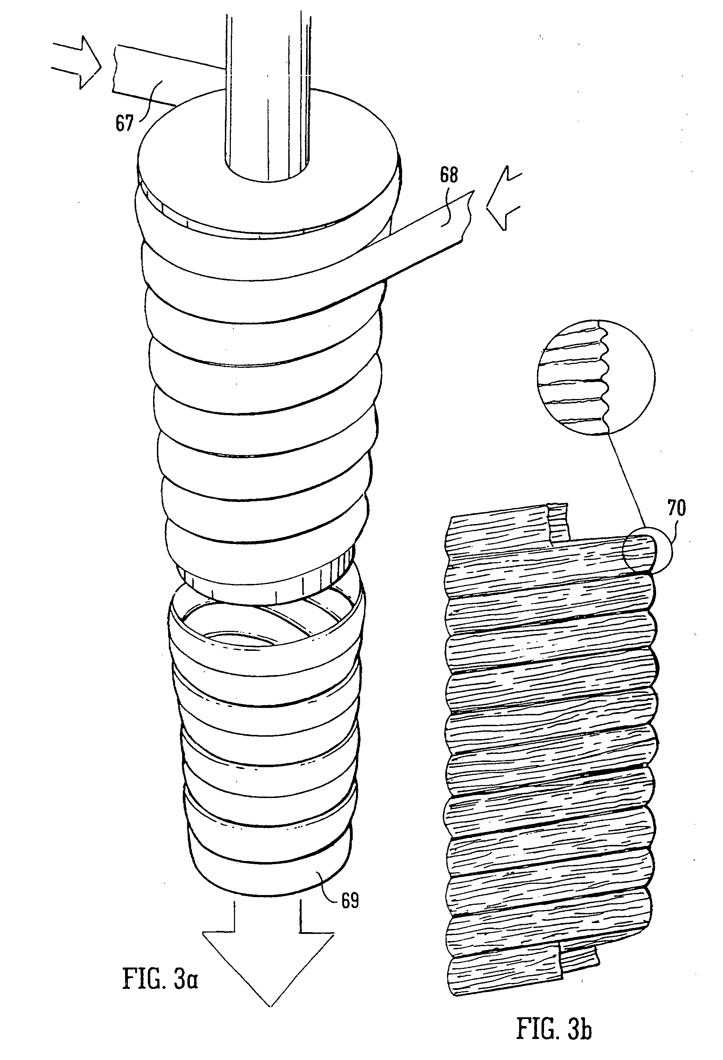

Figures 3a and 3b illustrate diagrammatically how a mandrel system can be utilised to take two pre-stabilized filament assemblies (67, 68) and, by a process of rotation and drawing as indicated by the arrow, produce a fully-stabilized filament assembly (69) featuring a convoluted surface texture (70). After the wound assembly is drawn off the mandrel, it is folded flat before incorporation and bonding to a carrier layer or between carrier layers.

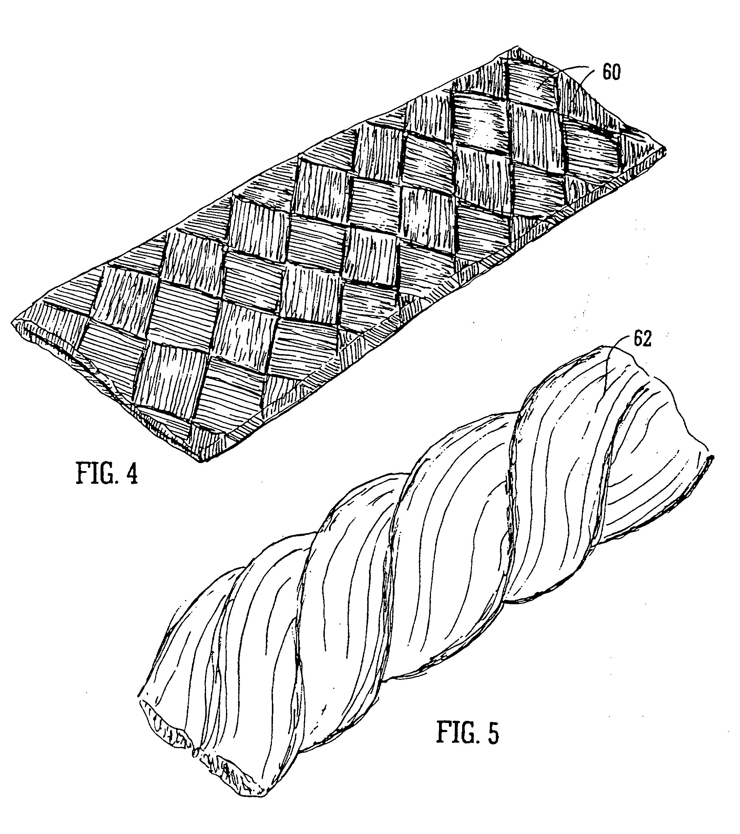

Figures 4 and 5 illustrate two alternative practical embodiments of fully stabilized filament assemblies suitable for bonding to a carrier layer to produce material in accordance with the invention. In the case of Figure 4, pre-stabilized filament sub-assemblies (60) have been intertwined to form a flattened braid. In the case of Figure 5, two pre-stabilized filament sub-assemblies or bundles have been twisted or folded together to form a fully stabilized filament assembly (62) which can subsequently be incorporated into a nonwoven assembly, for example, by hydroentanglement.

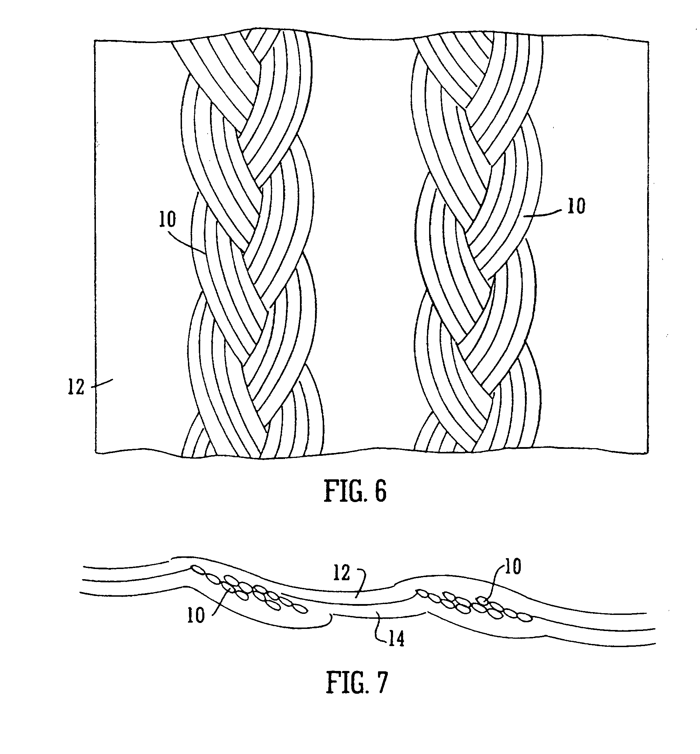

With reference to Figures 6 and 7, a first practical embodiment of the material of the invention consists of an inner core of two longitudinally-orientated stabilized filament assemblies in the form of braids (10) sandwiched between, and laminated to, respective outer layers (12, 14) of compacted fibres.

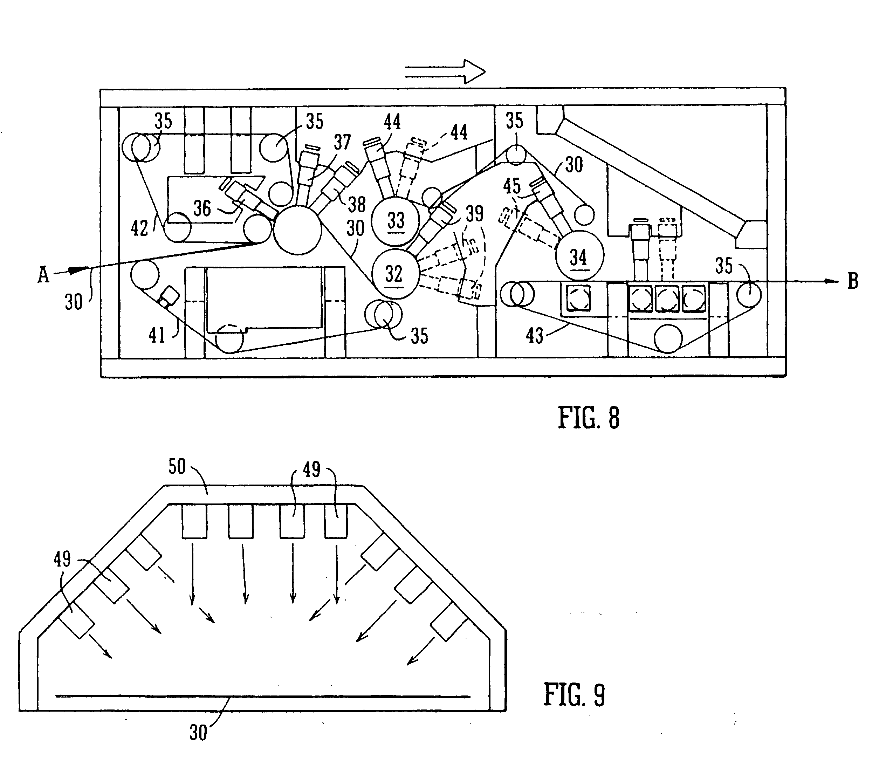

The material is formed by a process of hydroentanglement, a known process whereby jets of water at high pressure are fired at both outer surfaces of the outer layers (12, 14) as the component webs (12, 14) and the braided filament assemblies (10) are passed around a series of rollers and/or guides in apparatus similar to that shown in Figure 8. In this respect, the braided filament assemblies (10) are simply fed between the respective fibre webs (12, 14) at the upstream end of the apparatus.

The illustrated braids (10) are each formed from three filament sub-assemblies which may be termed bundles or ribbons. These may be made from any filament-forming polymer. Suitable materials can comprise cellulose acetate, rayons, polyesters or polypropylenes or any other suitable polymers known to those schooled in the art. The filaments in these assemblies may optionally consist of, or include, hollow or shaped derivatives which can significantly enhance the fluid transport characteristics of the final material. The filament sub-assemblies (bundles or ribbons) may or may not be pre-stabilized, e.g in manners described in relation to Figures 1 and 2.

The precise form of the braided filament assemblies may vary in other embodiments from large and bulky to small and fine, from a flat form similar to shoelaces to circular cross section similar to fine cord. Hollow assemblies may be employed to enhance storage and/or transport of fluids. The number of filaments per subassembly and the number of sub-assemblies may vary in different specific embodiments. Also, in other embodiments, the number of longitudinal filament assemblies may vary from a single unit to many, arranged side by side.

The braided filament assemblies impart bulk and three-dimensional structure to the final nonwoven material, as is apparent from Figure 7.

In other embodiments, the braided filament assemblies may also be pre-treated, for instance, by thermal compression at intervals to impart added textural features - undulations and width variations - to the final material.

The outer layers (12, 14) may also be of any type of fibre. Suitable examples are polyester or polypropylene. In other embodiments, in place of fibre layers (12, 14), pre-formed nonwoven materials made of fibres or filaments may be used.

Radio-opaque material may be incorporated by one filament or strand of filaments in the fully-stabilized filament assemblies, being pre-impregnated with barium sulphate. Such strands and filaments are of greater bulk than non-impregnated filaments but their sinuous course in the fully-stabilized filament assembly is advantageous as this avoids formation of a ridge when the finished material is stored as a roll. Moreover, there is provided a characteristic shape which can readily be recognised upon examining x-rays for foreign body contamination.

Figure 8 shows apparatus in which three layers have already been brought together at Point A on the diagram from originally separate supply wheels (not shown) to form a composite web (30). The outer webs can be of any fibres or filamentary material and can be either hydrophilic, hydrophobic or a combination of these. The inner material comprises the filament assemblies as already outlined in previous figures. The composite web (30) passes around four main rollers (31 - 34) and the plurality of auxiliary guide rolls (35). Three endless belts (41 - 43) pass around several guide rolls (35) and support various sections of the three-layer composite web (30). As the web (30) passes around the first main roller (31), high-pressure jets of water are directed at one side thereof from three successive transverse rows of nozzles (36, 37, 38). The first set of nozzles (36) imparts moisture to the composite (30), while the second and third sets (37, 38) consolidate the composite web (30) and begin the process of tangling together the fibres and/or filaments at the interfaces between the original three separate layers. Further, high-pressure jets of water are directed at the other surface of the web (30) by rows of nozzles (39) as it passes around the second main roller (32). Yet further jets of water from respective sets of nozzles (44, 45) impinge on the respective surfaces of the web (30) as it passes around the third and fourth main rollers (33, 34). The unitary laminate material then emerges at Point B.

Figure 9 shows how water may be directed at at least one of the respective outer webs of fibres or filaments at a plurality of different angles. Nozzles (49), particularly those near the beginning of the hydroentanglement process corresponding to nozzles such as (37, 38 or 39) in Figure 8, are mounted upon a bridge structure (50) so that some direct water at the web (30) at an angle. This water directed at an angle causes preferentially binding at the edges of spaced apart stabilized filament assemblies thus holding them securely in position.

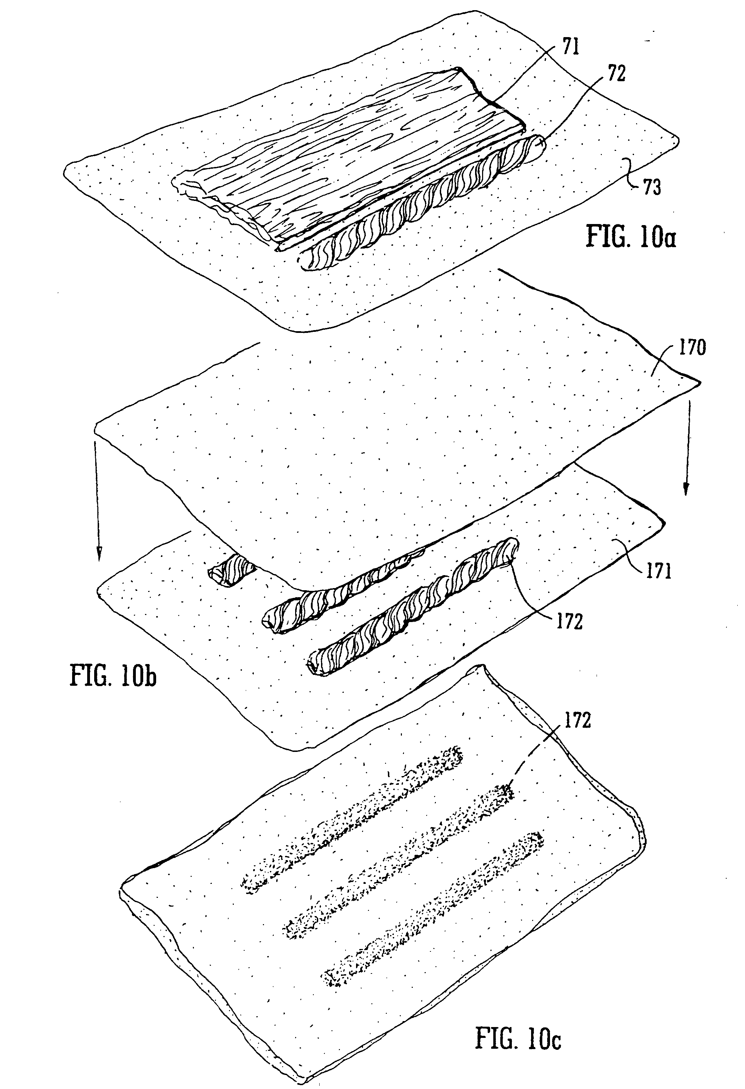

Figure 10a illustrates diagrammatically two different forms of fully stabilized filament assemblies (71, 72) bonded to a single layer (73) of nonwoven fabric. Filament assembly (72) is twisted. Figures 10b and 10c show how these stabilized filament assemblies (172) possibly similar to (72) in figure 10a are bonded between two outer carrier layers (170, 171).

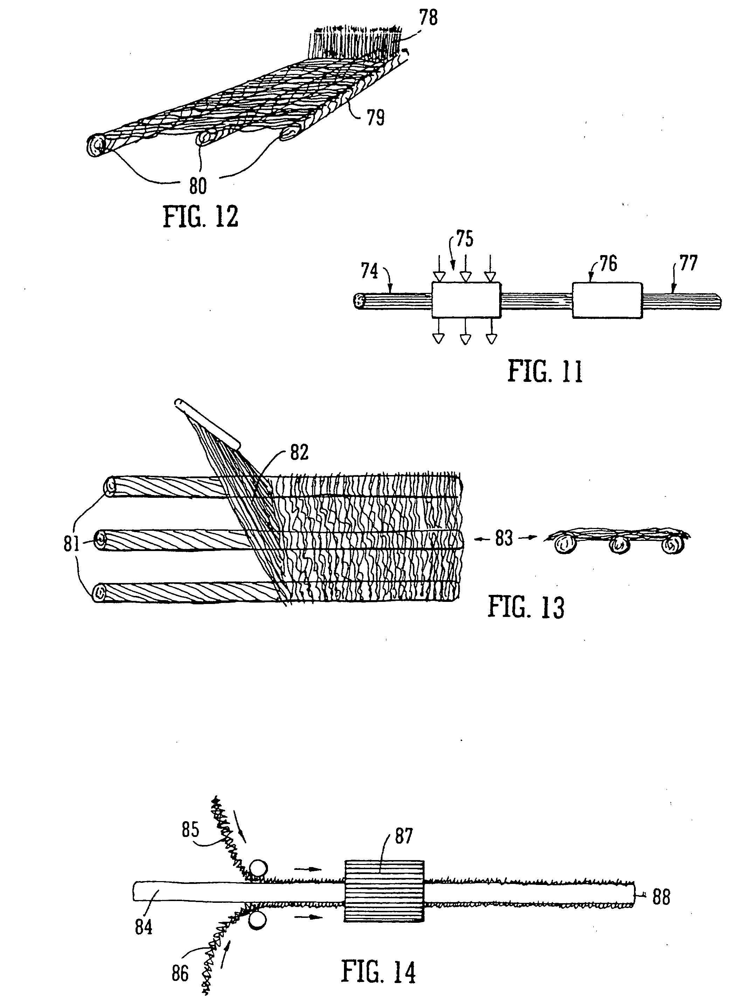

Figure 11 illustrates diagrammatically a means by which pre-stabilized filament assemblies (74) can be further stabilized by in-situ hydroentanglement (75) and drying (76) to form fully stabilized filament assemblies (77). This process is not to be confused with that described in Figure 8.

Figure 12 illustrates diagrammatically blown fluff pulp (78) which optionally could contain melt-blown fibres as seen in the Kimberly-Clark COFORM process deposited onto fully-stabilized filament assemblies (79) to produce an absorbent composite structure (80) eminently suitable for absorbent matrices for feminine hygiene, infant diapers and adult incontinence products.

Figure 13 illustrates diagrammatically fully-stabilized filament assemblies (81) surrounded by melt-blown fibres (82) to produce a bi-layered structure (83), again suitable for absorbent composites.

Figure 14 illustrates diagrammatically fully-stabilized filament assemblies (84) surrounded by two layers of spun-bonded nonwoven (85, 86) and subjected to thermal bonding by through-air technology (87) to produce a sandwich-type structure (88) suitable for absorbent composites.

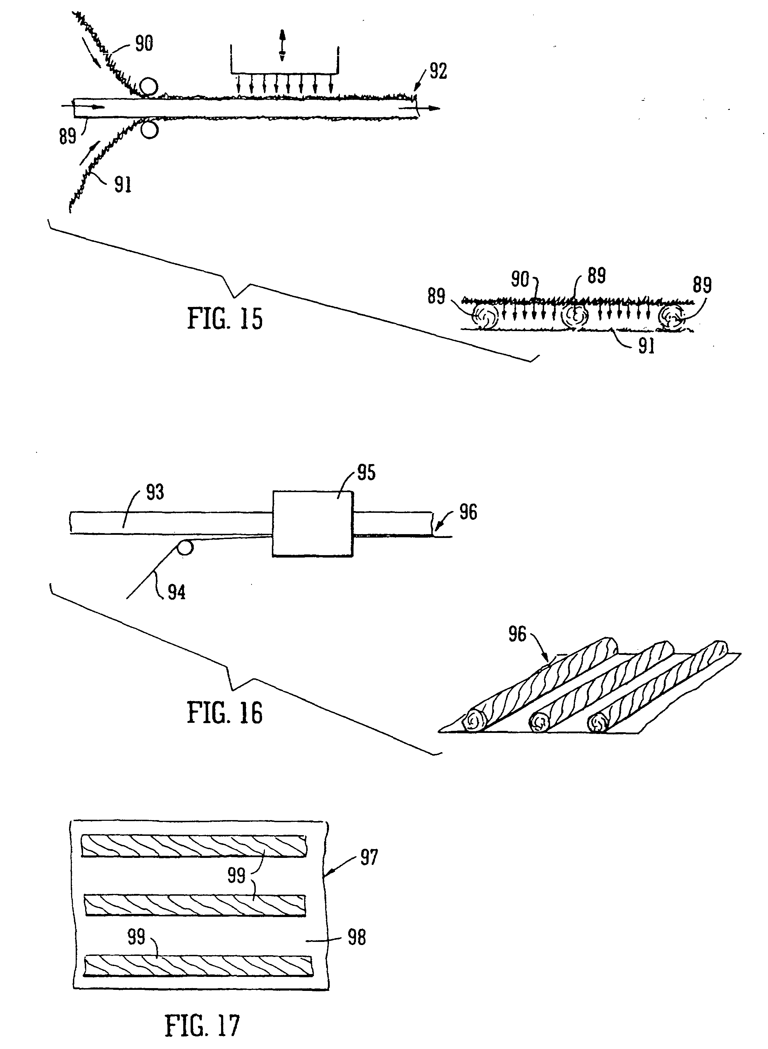

Figure 15 illustrates diagrammatically fully-stabilized filament assemblies (89) surrounded by cross-laid fibrous fleeces (90, 91) and then subjected to needle punching in zones apart from these stabilized filament assemblies to prevent their damage and to give an integrated absorbent composite (92).

Figure 16 illustrates diagrammatically fully-stabilized filament assemblies (93) being laminated to water-vapour-permeable film (94) by ultrasonic technology (95) to produce a simple bi-layered structure (96) featuring excellent absorbency performance. This performance is enhanced particularly in feminine care applications if the film features a degree of flexibility in use.

Figure 17 illustrates diagrammatically one embodiment of a completed absorbent composite (97) according to the present invention with fibrous material (98) surrounding and controlling the placement of the fully-stabilized filament assemblies (99). In this instance, the fully-stabilized filament assemblies are completely enclosed with no edges being exposed at the periphery of the finished composite product.

## Claims

1. A method of producing a non-woven textile structure comprising the steps of: initial consolidation of a plurality of substantially parallel continuous filaments to provide a partially stabilized filament assembly; further constraining said filament assembly by a folding, bundling, twisting or intertwining operation; and bonding a spaced array of such resulting constrained filament assemblies to a carrier layer.

2. A method according to claim 1 wherein the step of initial consolidation is accomplished by application of solvent and pressure.

3. A method according to claim 1 wherein the step of initial consolidation is accomplished by hydroentanglement.

4. A method according to claim 1 wherein the step of initial consolidation is accomplished by embossing.

5. A method according to claim 1 wherein the step of initial consolidation is accomplished by crimping, and is followed by an additional step of stretching the filament assembly.

6. A method according to any preceding claim wherein the step of further constraining the filament assembly is accomplished by braiding.

7. A method according to any preceding claim wherein the step of further constraining the filament assembly is accomplished by winding it upon a conical mandrel, then removing it in wound configuration from the mandrel and folding it flat.

8. A method according to any preceding claim wherein the filament assemblies are bonded to the carrier layer by hydroentanglement.

9. A method according to any preceding claim wherein the filament assemblies are sandwiched between a carrier layer and a further layer and bonded thereto.

10. A method according to any preceding claim wherein the or each filament assembly is cut at intervals prior to bonding to the carrier layer.

11. Anon-woven textile structure produced according to the method of any preceding claim and comprising a plurality of spaced apart stabilized filament assemblies, each composed of substantially parallel filaments, bonded to a carrier layer.

12. A structure according to claim 11 wherein the filament assemblies are sandwiched between and bonded to the carrier layer and a further layer.

13. A structure according to claim 11 wherein the filament assemblies are embedded within the carrier layer.

14. A structure according to claims 11 to 13 wherein the carrier layer and the further layer, when present, comprises fibres or filaments or a non-woven material formed of fibres or filaments.

15. A structure according to claims 11 to 14 wherein the filament assemblies comprise cellulose acetate.

16. A structure according to any of claims 11 to 15 wherein the carrier layer, and the further layer when present, extend beyond the filament assembly or assemblies at the edges of the structure.

17. A structure according to any of claims 11 to 16 and having a three dimensional structure, i.e. a variation in thickness and/or defined surface contouring, which is visible or can be felt by hand.

18. A structure according to any of claims 11 to 17 whereby each filament assembly includes thermosetting filaments.

19. A structure according to any of claims 11 to 18 whereby each filament assembly includes radio-opaque material.

20. A structure according to any of claims 11 to 19 whereby the, or each, filament assembly comprises absorbent material.

21. A structure according to any of claims 11 to 20 in which the fibres of at least one of the carrier or further layers are hydrophobic or semi-hydrophobic.

## Patentansprüche

1. Verfahren zur Herstellung einer nicht gewebten textilen Struktur mit den Schritten: Anfangsverfestigung einer Anzahl von im Wesentlichen parallelen Filamenten, um einen teilweise stabilisierten Filamentverbund zu erhalten; weiteres Verschränken des Filamentverbunds durch Falten, Bündeln, Verdrehen oder Verweben; und Verbinden von mit Zwischenraum angeordneten derart verschränkten Filamentverbünden mit einer Trägerschicht.

2. Verfahren nach Anspruch 1, wobei der Schritt der Anfangsverfestigung durch Anwendung von Lösungsmittel und Druck ausgeführt wird.

3. Verfahren nach Anspruch 1, wobei der Schritt der Anfangsverfestigung durch Wasserstrahlverfestigung ausgeführt wird.

4. Verfahren nach Anspruch 1, wobei der Schritt der Anfangsverfestigung durch Gaufrieren ausgeführt wird.

5. Verfahren nach Anspruch 1, wobei der Schritt der Anfangsverfestigung durch Kräuseln ausgeführt wird, gefolgt von einem zusätzlichen Schritt des Dehnens des Filamentverbunds.

6. Verfahren nach einem der voranstehenden Ansprüche, wobei der Schritt des weiteren Verschränkens des Filamentverbunds durch Verflechten ausgeführt wird.

7. Verfahren nach einem der voranstehenden Ansprüche, wobei der Schritt des weiteren Verschränkens des Filamentverbunds durch Aufwickeln auf einen konischen Dorn und anschließendes Abnehmen der gewickelten Struktur von dem Dorn und flaches Zusammenfalten ausgeführt wird.

8. Verfahren nach einem der voranstehenden Ansprüche, wobei die Filamentverbünde mittels Wasserstrahlverfestigung mit der Trägerschicht verbunden werden.

9. Verfahren nach einem der voranstehenden Ansprüche, wobei die Filamentverbünde zwischen einer Trägerschicht und einer weiteren Schicht angeordnet und damit verbunden werden.

10. Verfahren nach einem der voranstehenden Ansprüche, wobei der oder jeder Filamentverbund vor dem Verbinden mit der Trägerschicht in Abständen zerschnitten wird.

11. Nicht gewebte textile Struktur, die nach dem Verfahren nach einem der voranstehenden Ansprüche hergestellt ist und eine Anzahl von mit Abstand zueinander angeordneten stabilisierten Filamentverbünden aufweist, wobei jeder aus im Wesentlichen parallelen Filamenten besteht, die mit einer Trägerschicht verbunden sind.

12. Struktur nach Anspruch 11, wobei die Filamentverbünde zwischen der Trägerschicht und einer weiteren Schicht angeordnet und mit diesen verbunden sind.

13. Struktur nach Anspruch 11, wobei die Filamentverbünde in die Trägerschicht eingebettet sind.

14. Struktur nach einem der Ansprüche 11 bis 13, wobei die Trägerschicht und gegebenenfalls weitere Schicht Fasern oder Filamente oder ein nicht gewebtes Material aus Fasern oder Filamenten enthält.

15. Struktur nach einem der Ansprüche 11 bis 14, wobei die Filamentverbünde Celluloseacetat enthalten.

16. Struktur nach einem der Ansprüche 11 bis 15, wobei die Trägerschicht und gegebenenfalls die weitere Schicht sich an den Kanten der Struktur über den oder die Filamentverbünde hinaus erstrecken.

17. Struktur nach einem der Ansprüche 11 bis 16 mit einer dreidimensionalen Struktur, d.h. mit einer Veränderung der Dicke und/oder einer vorgegebenen Oberflächenkonturierung, die sichtbar ist oder mit der Hand gefühlt werden kann.

18. Struktur nach einem der Ansprüche 11 bis 17, wobei jeder Filamentverbund wärmehärtende Filamente enthält.

19. Struktur nach einem der Ansprüche 11 bis 18, wobei jeder Filamentverbund strahlungsundurchlässiges Material enthält.

20. Struktur nach einem der Ansprüche 11 bis 19, wobei der oder jeder Filamentverbund absorbierendes Material enthält.

21. Struktur nach einem der Ansprüche 11 bis 20, wobei die Fasern von zumindest einer der Trägerschicht oder weiteren Schichten hydrophob oder teilweise hydrophob sind.

## Revendications

1. Procédé pour produire une structure textile non tissée comprenant les étapes de : consolider initialement d'une pluralité de filaments continus sensiblement parallèles pour fournir un ensemble de filaments partiellement stabilisés ; contraindre davantage ledit ensemble de filaments par une opération de pliage, d'empaquetage, de torsion ou d'entrelacement ; et fixer un réseau espacé de tels ensembles de filaments contraints résultants sur une couche de support.

2. Procédé selon la revendication 1, dans lequel l'étape de consolidation initiale est accomplie en appliquant un solvant et une pression.

3. Procédé selon la revendication 1, dans lequel l'étape de consolidation initiale est accomplie par hydro-emmelage.

4. Procédé selon la revendication 1, dans lequel l'étape de consolidation initiale est accomplie par gaufrage.

5. Procédé dans la revendication 1, dans lequel l'étape de consolidation initiale est accomplie par fronçage, et est suivie par une étape additionnelle d'étirement de l'ensemble de filaments.

6. Procédé selon l'une quelconque des revendications précédentes, dans lequel l'étape de contrainte supplémentaire de l'ensemble de filaments est accomplie par tressage.

7. Procédé selon l'une quelconque des revendications précédentes, dans lequel l'étape de contrainte supplémentaire de l'ensemble des filaments est accomplie par enroulement de cet ensemble autour d'un mandrin conique, puis par retrait dans une configuration enroulée à partir du mandrin et par aplatissement.

8. Procédé selon l'une quelconque des revendications précédentes, dans lequel les ensembles des filaments sont liés à la couche de support par hydro-emmelage.

9. Procédé selon l'une quelconque des revendications précédentes, dans lequel les ensembles de filaments sont pris en sandwich entre la couche de support et une autre couche et liés à celles-ci.

10. Procédé selon l'une quelconque des revendications précédentes, dans lequel le ou chaque ensemble de filaments est coupé à intervalle avant d'être lié à la couche de support.

11. Structure textile non tissée produite selon le procédé selon l'une quelconque des revendications précédentes, et comprenant une pluralité d'ensembles de filaments stabilisés espacés, chacun composé de filaments sensiblement parallèles, lié à une couche de support.

12. Structure selon la revendication 11, dans laquelle les ensembles de filaments sont pris en sandwich et liés à la couche de support et à une autre couche.

13. Structure selon la revendication 11, dans laquelle les ensembles de filaments sont encastrés dans la couche de support.

14. Structure selon les revendications 11 à 13, dans laquelle la couche de support et l'autre couche, lorsque présente, comprend des fibres ou des filaments ou un matériau non tissé formé de fibres ou de filaments.

15. Structure selon les revendications 11 à 14, dans laquelle les ensembles de filaments comprennent de l'acétate de cellulose.

16. Structure selon l'une quelconque des revendications 11 à 15, dans laquelle la couche de support et l'autre couche lorsque présente, s'étendent au-delà du ou des ensemble(s) de filaments au niveau des bords de la structure.

17. Structure selon l'une quelconque des revendications 11 à 16 et ayant une structure tridimensionnelle, c'est-à-dire une variation dans l'épaisseur et/ou un contour de surface défini, qui est visible ou qui peut être ressenti au toucher.

18. Structure selon l'une quelconque des revendications 11 à 17, dans laquelle chaque ensemble des filaments comprend des filaments thermodurcissables.

19. Structure selon l'une quelconque des revendications 11 à 18, dans laquelle chaque ensemble de filaments comprend un matériau radio-opaque.

20. Structure selon l'une quelconque des revendications 11 à 19, dans laquelle le ou chaque ensemble de filaments comprend un matériau absorbant.

21. Structure selon l'une quelconque des revendications 11 à 20, dans laquelle les fibres d'au moins un parmi la couche de support et l'autre couche sont hydrophobes ou semi-hydrophobes.
